(19) Europäisches Patentamt / European Patent Office / Office européen des brevets

(11) **EP 3 276 512 A1**

(12) **EUROPEAN PATENT APPLICATION**

(43) Date of publication:
**31.01.2018 Bulletin 2018/05**

(51) Int Cl.:
***G06F 17/50*** (2006.01)

(21) Application number: **17176349.3**

(22) Date of filing: **16.06.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **25.07.2016 JP 2016145674**

(71) Applicant: **Fujitsu Limited**
**Kawasaki-shi, Kanagawa 211-8588 (JP)**

(72) Inventors:
• **Ogasawara, Keita**
  **Fukuoka, 819-0395 (JP)**
• **Suwa, Tamon**
  **Kanagawa, 211-8588 (JP)**

(74) Representative: **Hoffmann Eitle**
**Patent- und Rechtsanwälte PartmbB**
**Arabellastraße 30**
**81925 München (DE)**

(54) **COMPUTER-READABLE RECORDING MEDIUM, PARTICLE SIMULATION METHOD, AND INFORMATION PROCESSING APPARATUS**

(57)    A particle simulation program is disclosed. A computer forms a particle generation surface in a vicinity of an inflow port. The computer forms a particle disappearance surface representing a boundary to eliminate particles depending on the particle generation surface. The computer performs a particle simulation, in which the particles of fluid filled in a vessel are flowed out from the inflow port. The computer periodically generates the particles from the particle generation surface. The computer eliminates a particle crossing out of the particle disappearance surface.

FIG.4

**Description**

FIELD

The embodiments discussed herein are related to a computer-readable recording medium, a particle simulation method, and an information processing apparatus.

BACKGROUND

In recent years, various fluid analysis methods have been presented to numerically calculate a movement of fluid (also called "continuum") such as water, the air, or the like by using a particle method.

Regarding the particle method, one of technologies is presented to generate or delete particles based on positions of boundary particles calculated based on an internal pressure of a mold, which represents a pressure change of an inflow port and is regarded as reaction of a repulsive force acting on the particles by a wall surface potential of the boundary particles, and on an external pressure of emitting the particles to the mold.

[Patent Documents]

[Patent Document 1]
Japanese Laid-open Patent Publication No. 2015-170327
[Patent Document 2]
Japanese Laid-open Patent Publication No. 2014-081900
[Patent Document 3]
Japanese Laid-open Patent Publication No. 2002-283001
[Patent Document 4]
International Publication Pamphlet No. WO2010-032656

[Non-Patent Document]

[Non-Patent Document 1]

J. J. Monaghan, "Smoothed Particle Hydrodynamics", Annu. Rev. Astron. Astrophys. 30:543 - 74 (1992)

In the particle method, it is easy to inflow the particles at a constant flow velocity (by a constant inflow amount). However, it is difficult to set an inflow condition by a constant pressure value on an inflow surface. That is, there is a problem, in which the pressure in the vicinity of the inflow port (an inflow surface) becomes higher than in an actual pressure due to the particles in counterflow with respect to a particle simulation representing a phenomenon in which the fluid filling the vessel inflows downward from an opening of a bottom surface.

SUMMARY

It is an object to avoid an increase of a pressure of an inflow with respect to a particle simulation.

According to one aspect of the embodiments, there is provision for a non-transitory computer-readable recording medium storing therein a particle simulation program that causes a computer to execute a process including: forming a particle generation surface in a vicinity of an inflow port; forming a particle disappearance surface representing a boundary to eliminate particles depending on the particle generation surface; performing a particle simulation, in which the particles of fluid filled in a vessel are flowed out from the inflow port; periodically generating the particles from the particle generation surface; and eliminating a particle crossing out of the particle disappearance surface.

BRIEF DESCRIPTION OF DRAWINGS

FIG. 1 is a diagram illustrating a model example of a calculation condition for an inflow of liquid;
FIG. 2 is a diagram illustrating an example of a particle generation surface for a model;
FIG. 3 is a diagram for explaining a scheme in an embodiment;
FIG. 4 is a diagram illustrating a hardware configuration of a particle simulation apparatus;

FIG. 5 is a diagram illustrating a first functional configuration of a particle simulation apparatus;
FIG. 6 is a diagram illustrating a functional configuration example of a particle disappearance surface setting part;
FIG. 7 is a flowchart for explaining the particle simulation in a first functional configuration;
FIG. 8 is a flowchart for explaining an input data acquisition process in a first functional configuration;
FIG. 9 is a diagram illustrating a second functional configuration of a particle simulation apparatus;
FIG. 10 is a flowchart for explaining the input data acquisition process in the second functional configuration;
FIG. 11A and FIG. 11B are diagrams illustrating a setting example for each of shapes of inflow ports;
FIG. 12A and FIG. 12B are diagrams illustrating a setting example of a margin; and
FIG. 13A and FIG. 13B are diagrams illustrating setting examples of a wall surface not to eliminate a counterflow particle.

## DESCRIPTION OF EMBODIMENTS

A preferred embodiment of the present invention will be described with reference to the accompanying drawings. First, a fluid analysis method will be described. As the fluid analysis method, a Smoothed Particle Hydrodynamics (SPH) method, a Moving Particle Semi-implicit, and a Moving Particle Simulation (MPS) method have been known to discretize continuums as particles (also called "fluid particles") and to represent the continuums by distribution.

In these methods for representing an analysis subject by using a particle distribution, a particle within a distance h, which is called an influence radius, from another particle is defined as a neighbor particle, and information of the neighbor particle is used.

As an example, a formula is presented to discretize an equation of motion by the SPH method as follows:
[Formula 1]

$$\frac{d\mathbf{v}_a}{dt} = -\sum_b m_b \left[ \left( \frac{P_b + P_a}{\rho_b \rho_a} \right) + \Pi_{ab} \right] \frac{\partial W(|\mathbf{r}_a - \mathbf{r}_b|, h)}{\partial \mathbf{r}_a}, \qquad \cdots \quad (1)$$

In the above formula (1), a subscript character represents each of the particles. That is, $r_a$, $V_a$, $\rho_a$, $P_a$, and $m_a$ indicates a position vector, a velocity vector, a density, a pressure, and a mass of a particle "a", respectively. $\Pi_{ab}$ indicates an amount calculated by dividing the viscous stress tensor by the density. W is a Kernel function, and is used to form a continuous field from a distribution of the particles. The following cubic spline function or the like is frequently used.
[Formula 2]

$$W(r,h) = \begin{cases} \left( 1 - 1.5\left(\frac{r}{h}\right)^2 + 0.75\left(\frac{r}{h}\right)^3 \right) / \beta & 0 \leq \frac{r}{h} < 1, \\ 0.25\left( 2 - \frac{r}{h} \right)^3 / \beta & 1 \leq \frac{r}{h} < 2, \\ 0 & 2 \leq \frac{r}{h}. \end{cases} \qquad \cdots \quad (2)$$

An inflow condition of liquid for a calculation is given by generation of the particles at a specific location. In this case, the inflow condition is given by applying specific velocity, pressure, density, mass, and the like to each of the particles. In the particle method, it is easy to inflow the particles at a constant flow velocity (the constant inflow amount). It is difficult to set the inflow condition at a constant pressure value on the inflow surface.

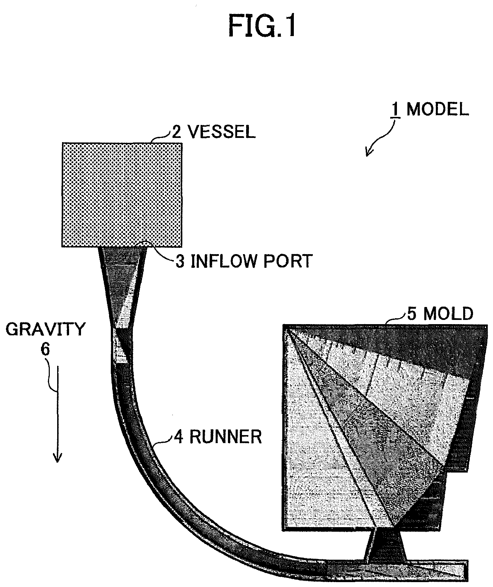

Accordingly, a case is considered whereby the particle simulation of the phenomenon, in which the fluid filling the vessel inflows downward from the opening of the bottom surface, is conducted. In the particle simulation, the liquid in the vessel positioned at a specific location depicted in FIG. 1 may be flowed into the vessel. FIG. 1 is a diagram illustrating a model example of the calculation condition for an inflow of the liquid.

The model depicted in FIG. 1 is represented as an area for the particle simulation to analyze, by a vessel 2 filled with fluid, a runner 4, and a mold 5. The vessel 2 includes an opening having a similar shape to an inflow port 3 of the runner 4, which is to inflow the fluid in the vessel 2 to the mold 5, and is connected to the inflow port 3.

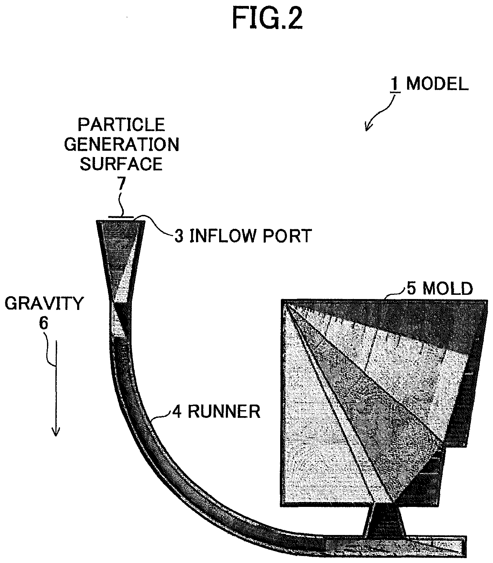

A case of generating the particles at a constant flow velocity (constant inflow amount), with the assumption that the fluid accumulated at an upper location as described above is caused to free-fall due to gravity 6, is described. FIG. 2 is a diagram illustrating an example of a particle generation surface for the model.

As depicted in FIG. 2, at a specific location (that is, a particle generation surface 7), by using a velocity at a lower bottom surface of the fluid starting to drop from the vessel 2, it is possible to reduce a computational cost by generating the particles at the constant flow velocity (the constant inflow amount).

As an outflow condition at this time, a velocity on the inflow surface is defined as constant. In a case in which the velocity in a vicinity of the particle generation surface is similar to the inflow velocity, the particles are flowed without any problem. However, in a case in which the inflow of the particles is proceeded with a condition as depicted in FIG. 2, after the runner is full of fluid, a backflow occurs towards a surface generating the fluid from the runner 4.

In such a calculation, a density becomes high due to inflowing particles and counter-flowing particles, and the pressure increases around a boundary of the inflow. In order to retain a condition of a constant velocity, the fluid particles in counterflow are pushed against. The pressure becomes higher around the inflow surface. A behavior whereby a pushback that is stronger than necessary is represented. Hence, a behavior of the fluid is not properly reproduced.

It is considered that it is possible to avoid this problem by using an inflow condition based on a pressure value at the inflow surface. In order to use an inflow condition of a constant pressure with respect to the inflow surface, a pressure calculation of the inflow surface in the particle method becomes complicated and is not easily performed.

In the embodiment, the fluid particles inflows at a constant velocity, and a particle disappearance boundary is set depending on the inflow surface. The fluid particles in the counterflow are eliminated, and an increase of the pressure of the inflow surface is avoided.

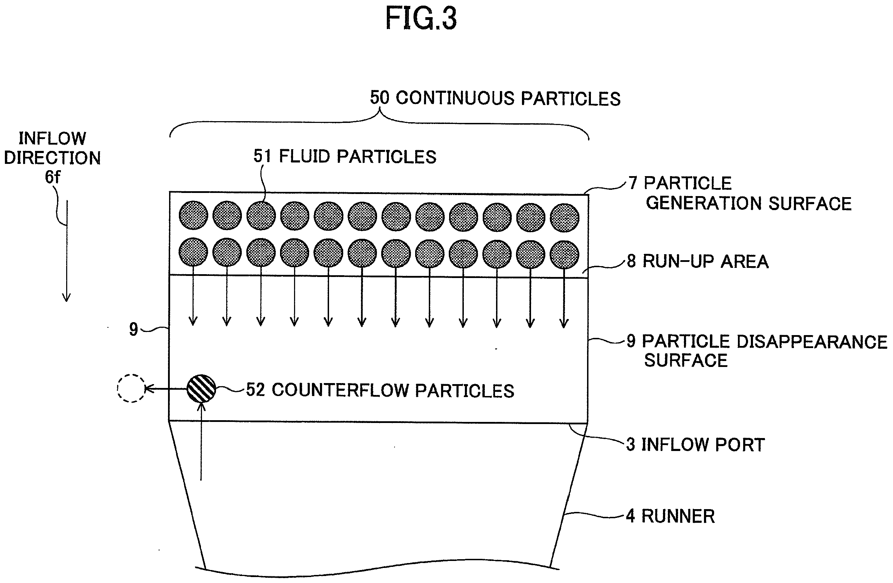

FIG. 3 is a diagram for explaining a scheme in the embodiment. In FIG. 3, the scheme in the embodiment is simply represented in two dimensions. In the particle simulation, the particle generation surface 7, which generates the fluid particles 51, is generated at a predetermined position distanced from the inflow port 3, and the fluid particles 51 are emitted to the inflow port 3 in an inflow direction 6. By generating the particle generation surface 7, it is possible to simplify the particle simulation of an inside of the vessel 2.

The fluid particles 51 are accelerated in a run-up area 8, which is defined, and approximately advance straightly to enter the inflow port 3. In the following, a plurality of the fluid particles 51, which are collectively and successively generated on the particle generation surface 7 by the particle simulation, are illustrated as continuous particles 50. The continuous particles 50 are regarded as a model to represent fluid, and have data of center coordinates, velocity, an influence radius, density, mass, temperature, and the like.

A counterflow particle 52 depicted in FIG. 3 represents the fluid particles 51 in the counterflow from the runner 4. In an existing particle simulation, because of the fluid particles 51, the pressure becomes higher than the actual pressure in a vicinity of the inflow surface formed at the inflow port 3.

In the embodiment, by setting a particle disappearance surface 9 with respect to the counterflow particle 52, it is possible to rectify the phenomenon represented by the pressure increasing more than the actual pressure due to the counterflow particle 52 in the vicinity of the inflow port 3 of the runner 4.

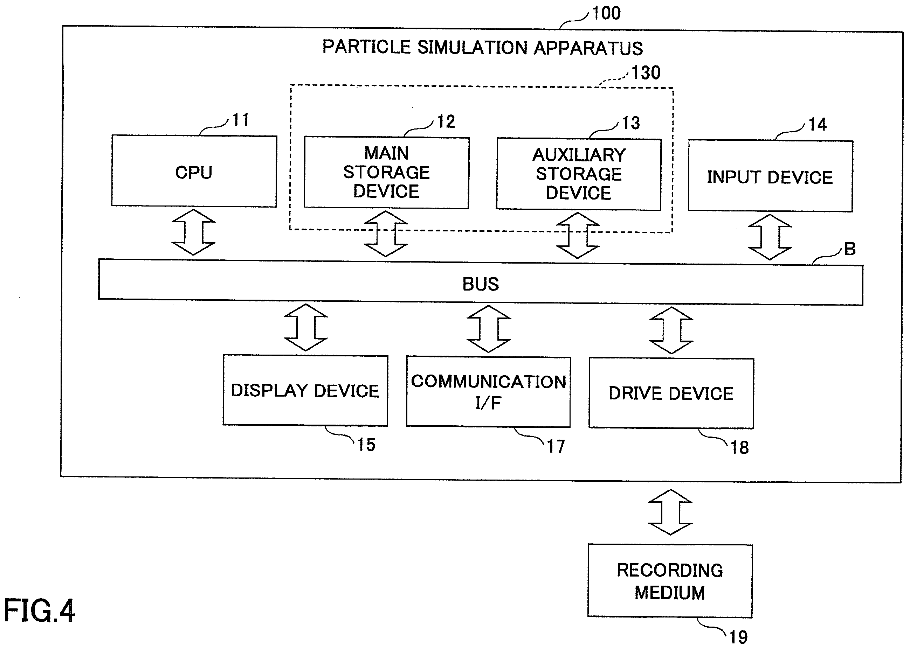

A particle simulation apparatus 100 according to the embodiment includes a hardware configuration as depicted in FIG. 4. FIG. 4 is a diagram illustrating the hardware configuration of the particle simulation apparatus. In FIG. 4, the particle simulation apparatus 100 is the information processing apparatus controlled by a computer, and includes a Central Processing Unit (CPU) 11, a main storage device 12, an auxiliary storage device 13, an input device 14, a display device 15, a communication InterFace (I/F) 17, and a drive device 18, which are mutually connected via a bus B.

The CPU 11 corresponds to a processor to control the particle simulation apparatus 100 in accordance with a program stored in the main storage device 12. The main storage device 12, in which a Random Access Memory (RAM), a Read Only Memory (ROM), or the like are used, stores or temporarily stores the program executed by the CPU 11, data for a process by the CPU 11, or data acquired for the process by the CPU 11.

As the auxiliary storage device 13, a Hard Disk Drive (HDD) or the like is used, and stores data such as the program to perform various processes and the like. A part of the program stored in the auxiliary storage device 13 is loaded in the main storage device 12, and the various processes are realized. A storage part 130 corresponds to the main storage device 12 and/or the auxiliary storage device 13.

The input device 14 includes a mouse, a keyboard, and the like, and is used for a user to input various information items for the process conducted by the particle simulation apparatus 100. The display device 15 displays various information items as controlled by the CPU 11. The input device 14 and the display device 15 may be integrated as a user interface such as a touch panel. The communication I/F 17 conducts wireless or wired communications through a network. The communications by the communication I/F 17 are not limited to the wireless or wired communications.

The program for realizing the process conducted by the particle simulation apparatus 100 may be provided by a recording medium 19 such as a Compact Disc Read-Only Memory (CD-ROM) to the particle simulation apparatus 100.

The drive device 18 interfaces between the recording medium 19 (such as the CD-ROM or the like) and the particle simulation apparatus 100.

Also, the program, which realizes the various processes according to the embodiment, is stored in the recording medium 19. The program stored in the recording medium 19 is installed into the particle simulation apparatus 100 through the drive device 18, and becomes executable by the particle simulation apparatus 100.

The recording medium 19 storing the program is not limited to the CD-ROM. The recording medium 19 may be any type of a recording medium, which is a non-transitory tangible computer-readable medium including a data structure. The recording medium 19 may be a portable recording medium such as a Digital Versatile Disc (DVD), a Universal Serial Bus (USB) memory, or the like, or a semiconductor memory such as a flash memory.

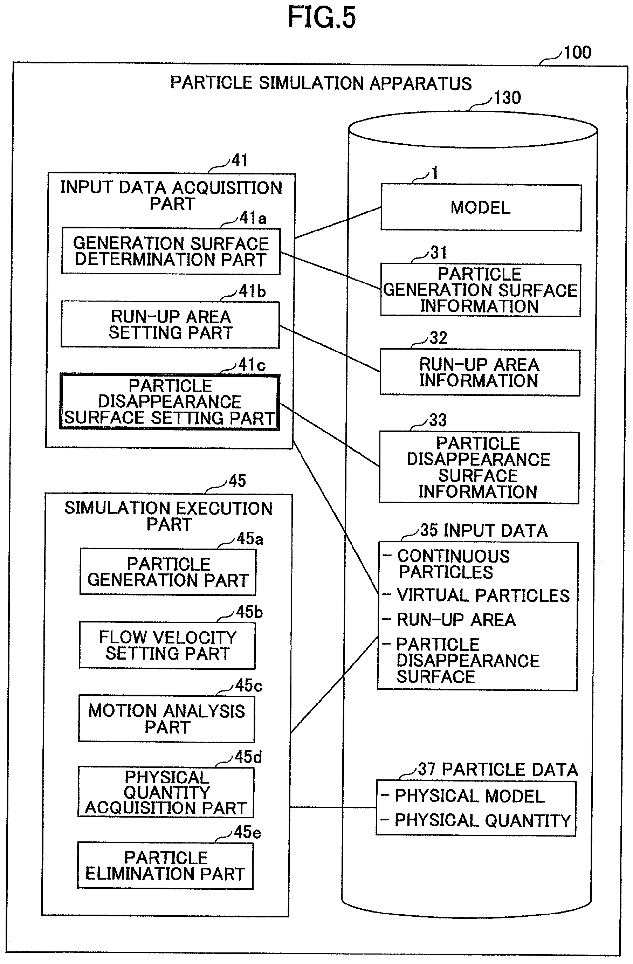

FIG. 5 is a diagram illustrating a first functional configuration of the particle simulation apparatus. In FIG. 5, the particle simulation apparatus 100 mainly includes an input data acquisition part 41, and a simulation execution part 45. Each of the input data acquisition part 41 and the simulation execution part 45 is realized by a process, which a corresponding program causes the CPU 11 to execute. The storage part 130 stores a model 1, particle generation surface information 31, run-up area information 32, particle disappearance surface information 33, input data 35, particle data 37, and the like.

The input data acquisition part 41 corresponds to a process for generating data to input to the simulation execution part 45, and further includes a generation surface determination part 41a, a run-up area setting part 41b, and a particle disappearance surface setting part 41c.

The generation surface determination part 41a determines the particle generation surface 7 based on a shape of the inflow port 3 indicated by the model 1. The particle generation surface 7 is generated immediately above the inflow port 3 and in the vicinity thereof parallel to the inflow surface of the inflow port 3. The particle generation surface information 31 for representing the particle generation surface 7 is stored in the storage part 130.

Also, virtual particles are defined on the particle generation surface 7 in order to conduct a generation determination of the continuous particles 50. The virtual particles are regarded as particle data similar to the continuous particles 50. The center coordinates, the inflow velocity, the inflow surface of the particles, and the like are represented by the particle data.

The run-up area setting part 41b sets the run-up area 8 having approximately the same length as the influence radius, perpendicular to the particle generation surface 7. The run-up area 8 is formed between the particle generation surface 7 and the particle disappearance surface 9. The run-up area information 32 for representing the run-up area 8 is stored in the storage part 130.

The particle disappearance surface setting part 41c refers to the model 1, and forms the particle disappearance surface 9 ranging from the run-up area 8 to the inflow port 3 based on the inflow port 3 and the inflow direction 6f. The particle disappearance surface information 33 representing the particle disappearance surface 9 in the two dimensions or three dimensions is stored in the storage part 130.

The fluid particles 51 flow through an inside surrounded by the particle disappearance surface 9 toward the inflow port 3. A shape of the particle disappearance surface 9 may correspond to that of the inflow port 3. Alternatively, a margin may be defined outside the inflow port 3 for the shape of the particle disappearance surface 9 to be wider. A size of a tubular cross-section formed by the particle disappearance surface 9 may be defined to be wider than the size of the inflow port 3.

The input data acquisition part 41 creates the input data 35 to be input to the simulation execution part 45 from the acquired information and the like. The input data 35 includes information of the continuous particles 50, the virtual particles, the run-up area 8, the particle disappearance surface 9, and the like.

The simulation execution part 45 is regarded as a process part that reads the input data 35 and executes the particle simulation, and further includes a particle generation part 45a, a flow velocity setting part 45b, a motion analysis part 45c, a physical quantity acquisition part 45d, and a particle elimination part 45e.

The particle generation part 45a determines a generation of the fluid particles 51 to flow into the mold 5 and generates the fluid particles 51. The flow velocity setting part 45b sets the flow velocity of the fluid particles 51. The motion analysis part 45c determines the motion of the continuous particles 50 in accordance with a physical model set to the continuous particles 50. The physical quantity acquisition part 45d acquires a physical quantity of the continuous particles 50. The particle elimination part 45e refers to information of the physical model or the like of the particle data 37, determines disappearance of the counterflow particle 52 in the vicinity of the particle disappearance surface 9, and deletes the counterflow particle 52.

The particle data 37 are updated as time progresses by the particle generation part 45a executing the particle simulation. The particle data 37 indicate information of the physical model, the physical quantity, and the like for each of the fluid particles 51 as the continuous particles 50.

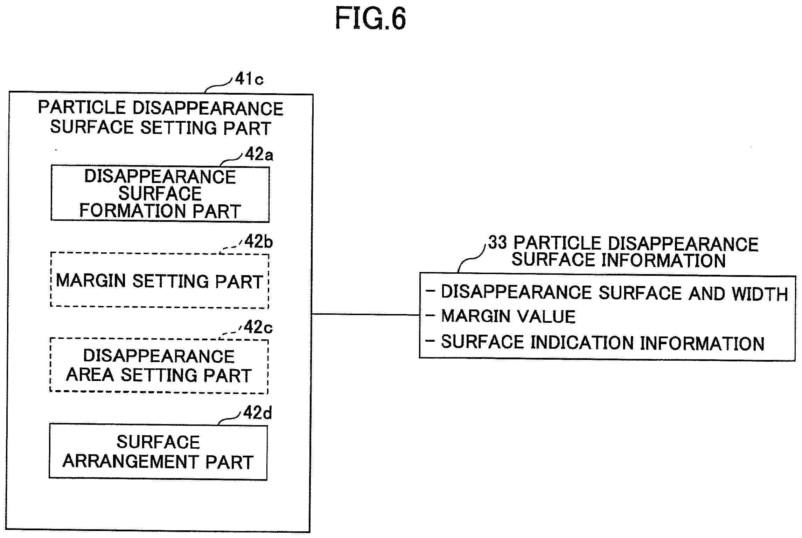

FIG. 6 is a diagram illustrating a functional configuration example of the particle disappearance surface setting part. In FIG. 6, the particle disappearance surface setting part 41c is regarded as a process part that sets the particle disappearance surface 9, and includes a disappearance surface formation part 42a, a margin setting part 42b, a disappearance area setting part 42c, and a surface arrangement part 42d. The margin setting part 42b and the disappearance area setting part 42c may be omitted.

The disappearance surface formation part 42a, referring to the model 1, and based on the inflow port 3 and the inflow direction 6f, forms the particle disappearance surface 9 ranging from the run-up area 8 to the inflow port 3, to be along the shape of the inflow port 3.

The margin setting part 42b sets the margin to make the tubular cross-section formed by the particle disappearance surface 9 wider from the inflow port 3 to an outside. Any margin may be defined. As an example, the margin may be set to be less than or equal to a diameter of the fluid particle 51 (the counterflow particle 52). Alternatively, the margin may be appropriately set by the user.

The disappearance area setting part 42c sets a partial area in the particle disappearance surface 9 where the disappearance surface formation part 42a is generated, as an area to eliminate the counterflow particle 52 or an area not to eliminate the counterflow particle 52. In a case in which the particle disappearance surface 9 is represented by four side surfaces of a rectangle, one of the four side surfaces may be indicated as a disappearance area. In a case in which the particle disappearance surface 9 is represented by a side surface of a cylinder, a direction from a center of a circle and a range are indicated as the disappearance area. A part of the particle disappearance surface 9 may be appropriately set by the user. Alternatively, for an area other than the disappearance area in the particle disappearance surface 9, the wall surface may be set.

The surface arrangement part 42d arranges the particle disappearance surface 9 along the inflow port 3. By the particle disappearance surface setting part 41c, the particle disappearance surface information 33 is output. By the particle disappearance surface information 33, at the least a disappearance surface shape and a length of the particle disappearance surface 9 in the inflow direction 6f are indicated, and surface indication information of a margin value, the disappearance area, the wall surface and the like may be indicated if necessary.

In a case in which the shape of the disappearance surface is represented, instead of indicating the disappearance area and the wall surface, a surface direction may be simply indicated. The run-up area 8 is defined on the particle disappearance surface 9 toward an upstream side of the inflow direction 6f from the inflow port 3, and the particle generation surface 7 is further defined above the run-up area 8.

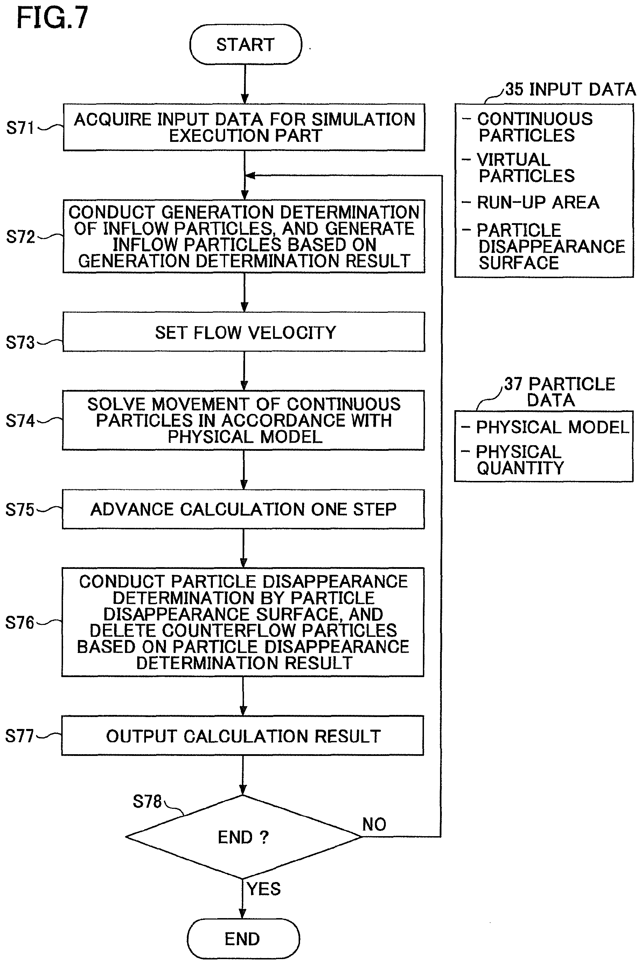

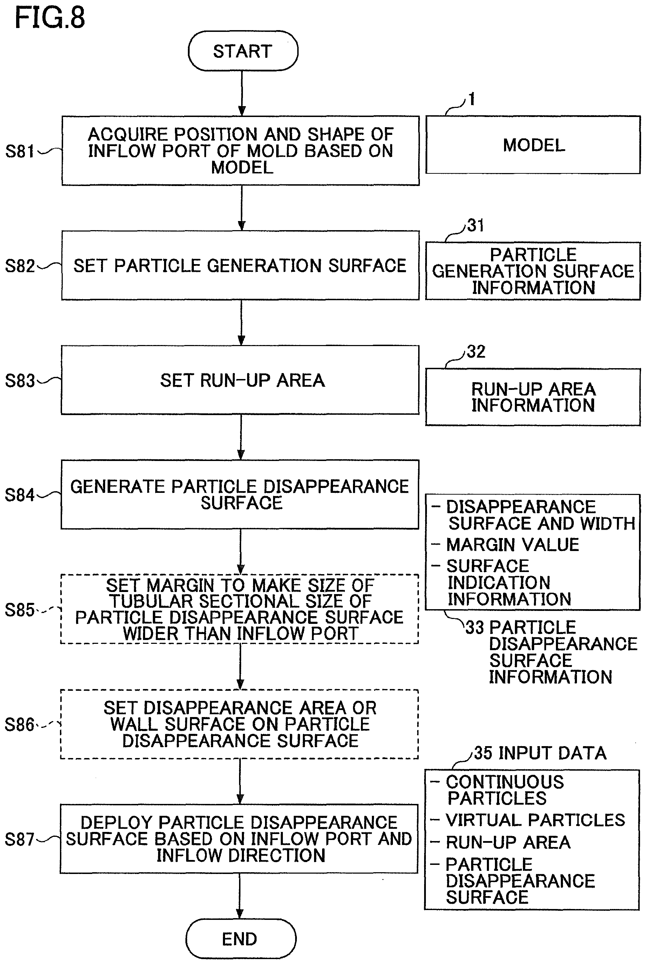

Next, a process conducted by the particle simulation apparatus 100 will be described. FIG. 7 is a flowchart for explaining the particle simulation in a first functional configuration. Referring to FIG. 7, in the particle simulation apparatus 100, when the input data acquisition part 41 acquires the input data 35 to be input to the simulation execution part 45 (step S71), the simulation execution part 45 reads the input data 35, and starts the particle simulation. An input data acquisition process conducted by the input data acquisition part 41 will be described with reference to FIG. 8.

In the simulation execution part 45, the particle generation part 45a conducts a generation determination of the inflow particles (the fluid particles 51 of the particle generation surface 7), and generates the inflow particles based on a generation determination result (step S72). The particle generation part 45a refers to information of the virtual particles from the input data 35. When a product of elapsed times from a previous generation of the inflow velocity, the inflow area, and the fluid exceeds a certain value, the inflow particles are generated on the virtual particles. That is, in the particle generation surface 7, the fluid particles 51 are generated.

Next, the flow velocity setting part 45b sets the flow velocity of the generated fluid particles 51 (step S73). The flow velocity setting part 45b may apply the constant velocity to the generated fluid particles 51. In order to accurately conduct a proximity computation by the particle method, the flow velocity setting part 45b may apply the same velocity as the inflow velocity to the fluid particles 51 in the run-up area 8, which is defined by the length of approximately the influence radius.

Then, the motion analysis part 45c solves a motion of the continuous particles 50 in accordance with the physical model of the particle data 37 (step S74). For the continuous particles 50 modeling the fluid, Navier-Stokes equations may be solved and an acceleration is acquired.

Next, the physical quantity acquisition part 45d conducts a time integration of the physical quantity of the continuous particles 50 by using a time differentiation term including the acceleration acquired by the motion analysis part 45c, and advances the time by a predetermined time span corresponding to one step (step S75). By using results of step S74 and step S75, the particle data 37 are updated.

Next, the particle elimination part 45e conducts a particle disappearance determination due to the particle disappearance surface 9 indicated by the input data 35, and deletes the counterflow particle 52 based on a particle disappearance determination result (step S76). The particles, which position outside the particle disappearance surface 9, are determined as the counterflow particle 52 and are deleted. A state, in which the velocity flowing counter to the inflow direction 6f (or the gravity 6), may be added as a requirement for determining the counterflow particle 52.

In response to an end of a time development calculation for one step, the simulation execution part 45 outputs a calculation result based on the particle data 37 (step S77), and determines whether a predetermined process for one step ends (step S78).

When the predetermined process has not ended (NO of step S78), the simulation execution part 45 goes back to step S72, and repeats the above described process in the same manner. Conversely, when the predetermined process ends (YES of step S78), the simulation execution part 45 terminates the particle simulation.

Next, the input data acquisition process conducted by the input data acquisition part 41 will be described. FIG.

8 is a flowchart for explaining the input data acquisition process in a first functional configuration. In FIG. 8, either one or both processes of steps S85 and S86 indicated by dashed lines may be omitted.

In the input data acquisition part 41, the generation surface determination part 41a acquires the position and the shape of the inflow port 3 of the mold 5 based on the model 1 (step S81). The generation surface determination part 41a generates and sets the particle generation surface 7 having the same shape as the inflow port 3 in a vicinity of an upstream side from the position of the inflow port 3 (step S82). In order to conduct the generation determination of the continuous particles 50, the virtual particles are set on the particle generation surface 7, and the particle generation surface information 31 representing the particle generation surface 7 is stored in the storage part 130.

The run-up area setting part 41b sets the run-up area 8 having the length of approximately the influence radius, perpendicular to the particle generation surface 7 (step S83). A bottom surface of the run-up area 8 has the same shape as that of the particle generation surface 7. The run-up area information 32 representing the run-up area 8 is stored in the storage part 130.

The steps S84 through S87 correspond to processes conducted by the particle disappearance surface setting part 41c. First, in the particle disappearance surface setting part 41c, the disappearance surface formation part 42a generates the particle disappearance surface 9 of a predetermined width perpendicular to the bottom surface of the run-up area 8 along the inflow direction 6f to correspond to the shape of the particle generation surface 7 (step S84). The disappearance surface shape indicating the shape of the tubular cross-section formed by the particle disappearance surface 9 and the length of the particle disappearance surface 9 are set in the particle disappearance surface information 33.

The margin setting part 42b sets the margin so that the size of the tubular cross-section formed by the particle disappearance surface 9 becomes wider than the inflow port 3 (step S85). A margin value is added to the particle disappearance surface information 33.

The disappearance area setting part 42c sets a disappearance area to eliminate the counterflow particle 52 or the wall surface not to eliminate the counterflow particle 52 at the particle disappearance surface 9 (step S86). The surface indication information indicating the disappearance area of the wall surface is added. Depending on the shape of the particle disappearance surface 9, the surface direction corresponding to the disappearance area or the wall surface may be indicated in the particle disappearance surface information 33.

Next, the surface arrangement part 42d arranges the particle disappearance surface 9 at the position of the inflow port 3 based on the particle disappearance surface information 33 with respect to the model 1 (step S87). The particle disappearance surface 9 is arranged between the run-up area 8 and the inflow port 3. After the particle disappearance surface 9 is arranged, the input data acquisition part 41 terminates the input data acquisition process.

In the above first functional configuration, by corresponding to the position and the shape of the inflow port 3, the particle generation surface 7, the run-up area 8, and the particle disappearance surface 9 are formed in this order. Next, a second functional configuration will be described. In the second functional configuration, after the particle disappearance surface 9 is generated perpendicularly to the inflow surface from the inflow port 3, the particle generation surface 7 is set, and the run-up area 8 is set.

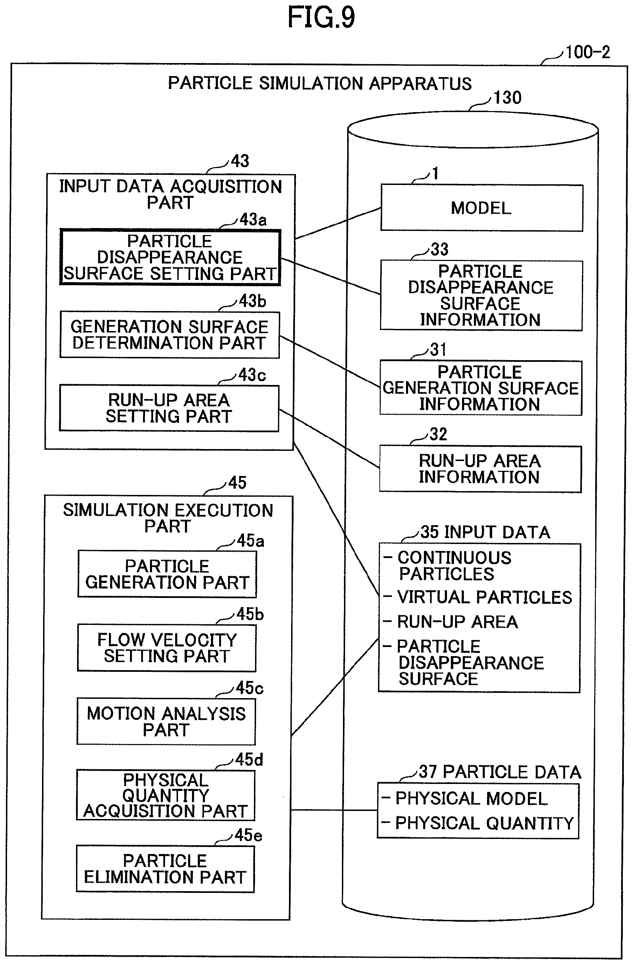

FIG. 9 is a diagram illustrating the second functional configuration of the particle simulation apparatus. In FIG. 9, a particle simulation apparatus 100-2 mainly includes an input data acquisition part 43 and the simulation execution part 45. Each of the input data acquisition part 43 and the simulation execution part 45 is realized by a process, which a corresponding program installed into the particle simulation apparatus 100-2 causes the CPU 11 of the particle simulation apparatus 100-2 to execute. The simulation execution part 45 is the same as that in the first functional configuration, and an explanation thereof will be omitted.

Similar to the first functional configuration, the storage part 130 stores the model 1, the particle generation surface information 31, the run-up area information 32, the particle disappearance surface information 33, the input data 35, the particle data 37, and the like.

The input data acquisition part 43 is regarded as the process part that generates data to input to the simulation execution part 45, similarly to the first functional configuration. However, as illustrated in a flowchart below, a procedure of processes is different from that in the first functional configuration. In the second functional configuration, the input data acquisition part 43 includes a particle disappearance surface setting part 43a, a generation surface determination part 43b, and a run-up area setting part 43c.

The particle disappearance surface setting part 43a, referring to the model 1, and based on the inflow port 3 and the inflow direction 6f, forms the particle disappearance surface 9 having a predetermined length, perpendicular to the inflow surface and from the inflow port 3, along the shape of the inflow port 3. The particle disappearance surface information 33 representing the particle disappearance surface 9 in the two dimensions or three dimensions is stored in the storage part 130.

The generation surface determination part 43b determines the particle generation surface 7 based on the shape (the inflow surface) of the inflow port 3 indicated by the model 1. The particle generation surface 7 is generated immediately above the inflow port 3 and in the vicinity thereof in parallel to the inflow surface of the inflow port 3, and at a location distanced by a height of the run-up area 8 from the particle disappearance surface 9. The particle generation surface information 31 representing the particle generation surface 7 is stored in the storage part 130. The height of the run-up area 8 corresponds to the length of approximately the influence radius. The virtual particles are defined in the same manner as the second functional configuration, and the explanation thereof will be omitted.

The run-up area setting part 43c sets the run-up area 8 having approximately the same length as the influence radius perpendicular to the particle generation surface 7. The run-up area 8 is formed between the particle generation surface 7 and the particle disappearance surface 9. The run-up area information 32 representing the run-up area 8 is stored in the storage part 130.

The input data acquisition part 43 acquires the input data 35 by the particle disappearance surface setting part 43a, the generation surface determination part 43b, and the run-up area setting part 43c. The simulation execution part 45 reads the input data 35 at a time of the particle simulation. The functional configuration and the process flow of the particle simulation conducted by the simulation execution part 45 are the same as those in the first embodiment. Hence, parts that are the same as those in the first embodiment are designated by the same reference numerals, and the explanation thereof will be omitted.

Also, the functional configuration of the input data acquisition part 43 includes the disappearance surface formation part 42a, the margin setting part 42b, the disappearance area setting part 42c, and the surface arrangement part 42d, similar to that illustrated in FIG. 6.

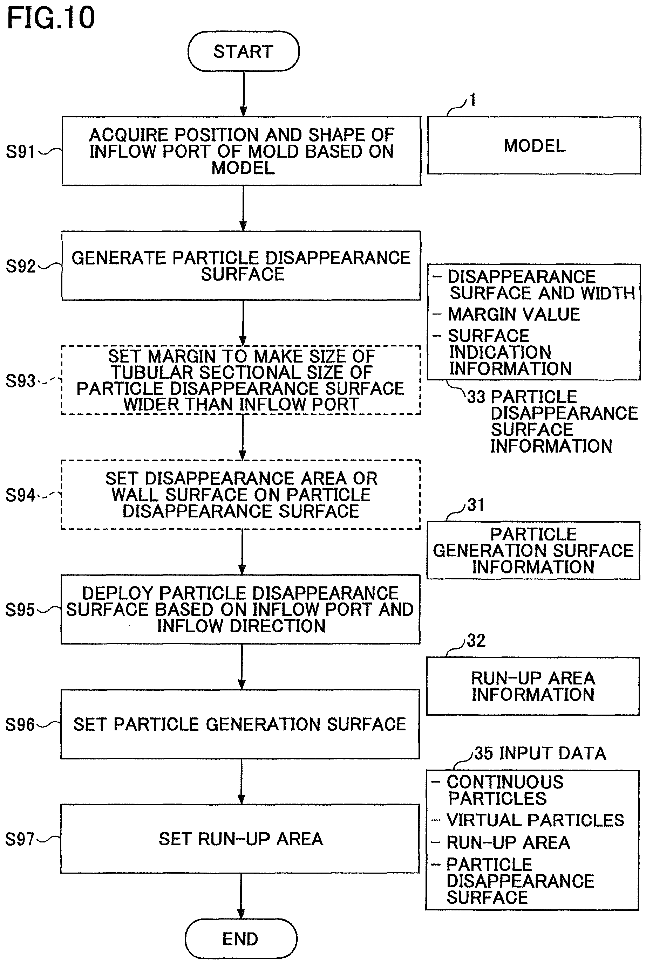

The input data acquisition process of the input data acquisition part 43 will be described in the second functional configuration illustrated in FIG. 9. FIG. 10 is a flowchart for explaining the input data acquisition process in the second functional configuration. In FIG. 10, either one or both processes of steps S93 and S94 indicated by dashed lines may be omitted.

In FIG. 10, steps S91 to S95 are conducted by the particle disappearance surface setting part 43a.

The particle disappearance surface setting part 43a acquires the position and the shape of the inflow port 3 of the vessel 5 based on the model 1 (step S91), and generates the particle disappearance surface 9 having a predetermined length parallel to the inflow direction 6f from the inflow port 3 (step S92). The particle disappearance surface 9 is generated within a range, in which the particle generation surface 7 is set near the inflow port 3. The disappearance surface shape indicating the tubular cross-section formed by the particle disappearance surface 9 and the width of the particle disappearance surface 9 are set to the particle disappearance surface information 33.

The margin setting part 42b sets the margin for the tubular cross-section formed by the particle disappearance surface 9 to be wider than the inflow port 3 (step S93). The margin value is added to the particle disappearance surface information 33.

The disappearance area setting part 42c sets the disappearance area to eliminate the counterflow particle 52 or sets the wall surface not to eliminate the counterflow particle 52 with respect to the particle disappearance surface 9 (step S94). The surface indication information indicating the disappearance area or the wall surface is added to the particle disappearance surface information 33. Depending on the particle disappearance surface 9, the surface direction corresponding to the disappearance area or the wall surface may be indicated by the particle disappearance surface information 33.

The surface arrangement part 42d arranges the particle disappearance surface 9 at the position of the inflow port 3 based on the particle disappearance surface information 33 with respect to the model 1 (step S95).

Next, the generation surface determination part 43b generates and sets the particle generation surface 7 having the same shape as the inflow port 3 at a location upstream from the particle disappearance surface 9 set at the inflow port 3, based on the position and the shape of the inflow port 3 of the vessel 5 (step S96). The particle generation surface 7 is set near the inflow port 3. The virtual particles are set on the particle generation surface 7 in order to conduct the generation determination of the continuous particles 50, and the particle generation surface information 31 representing the particle generation surface 7 is stored in the storage part 130.

Moreover, the run-up area setting part 43c sets the run-up area 8 having the length of approximately the influence radius, perpendicular to the particle generation surface 7 toward the inflow port 3 from the position of the particle generation surface 7 (step S97). The bottom surface of the run-up area 8 has the same shape as the particle generation surface 7. The run-up area information 32 representing the run-up area 8 is stored in the storage part 130. The particle disappearance surface setting part 43a terminates the particle disappearance surface setting process.

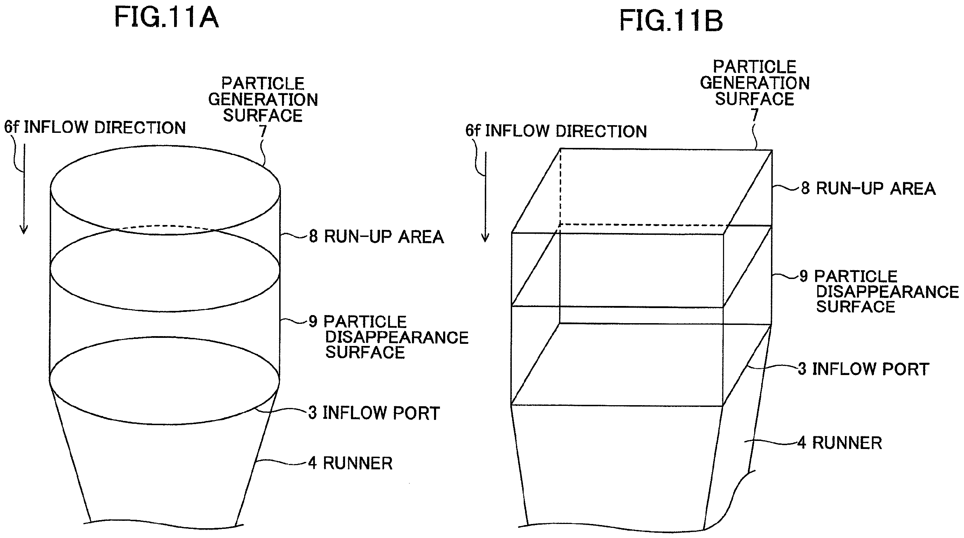

Setting examples of the particle generation surface 7, the run-up area 8, the particle disappearance surface 9, and the like corresponding to the shape of the inflow port 3 will be illustrated below. The setting examples described with reference to FIG. 11 to FIG. 13 are common to the first functional configuration and the second functional configuration.

FIG. 11A and FIG. 11B are diagrams illustrating a setting example for each of shapes of the inflow ports. In FIG. 11A, the setting example is depicted in a case in which the inflow port 3 is a circular form.

The particle generation surface 7 having the same circular form as the inflow port 3 is defined at the upstream side of the inflow direction 6f with respect to the inflow port 3. The run-up area 8, which is cylindrical and for which the particle generation surface 7 is an upper surface, is defined. The particle disappearance surface 9 is formed from the bottom surface of the run-up area 8 to the inflow port 3.

FIG. 11B illustrates the setting example in a case in which the inflow port 3 is a quadrangle. The particle generation surface 7 having the same quadrangular form as the inflow port 3 is defined at the upstream side of the inflow direction 6f with respect to the inflow port 3. The run-up area 8, which is quadrangular and for which the particle generation surface 7 is an upper surface, is defined. The particle disappearance surface 9 is formed from the bottom surface of the run-up area 8 to the inflow port 3.

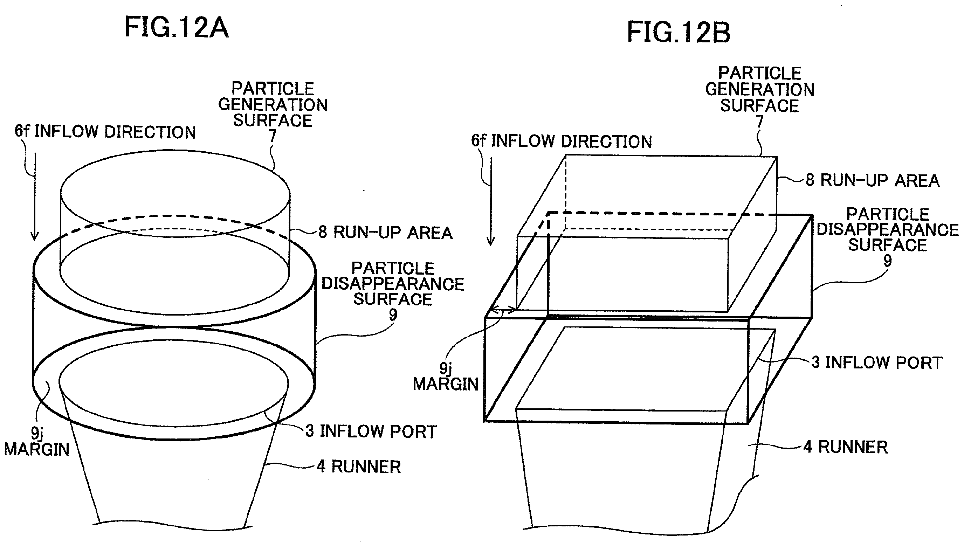

FIG. 12A and FIG. 12B are diagrams illustrating a setting example of the margin. FIG. 12A depicts an example, in which a margin 9j is defined outside the inflow port 3 being circular. FIG. 12B depicts an example, in which the margin 9j is set outside the inflow port 3 being quadrangular. The tubular cross-section formed by the particle disappearance surface 9 includes a cross-section wider by the margin 9j toward the outside with respect to the shapes of the particle generation surface 7, the run-up area 8, and the inflow port 3.

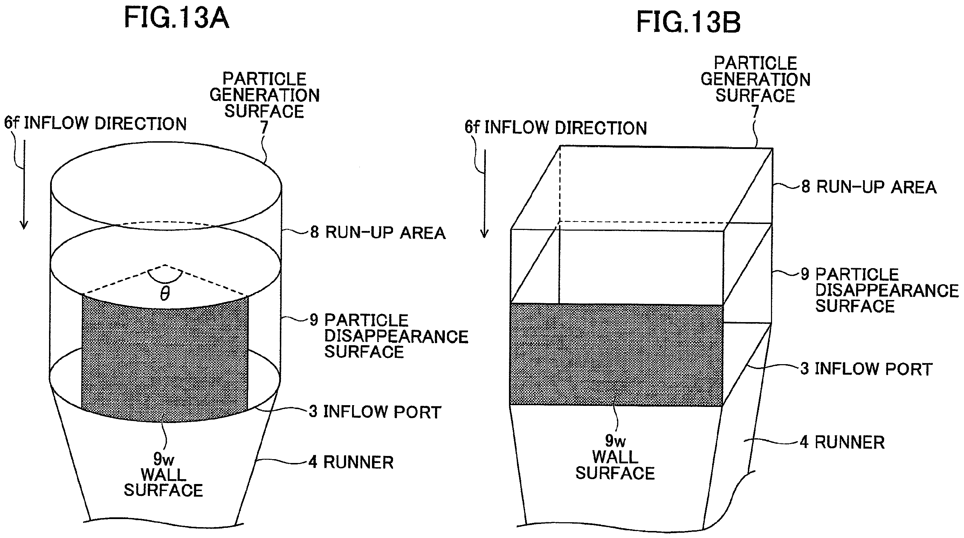

FIG. 13A and FIG. 13B are diagrams illustrating setting examples of the wall surface for not eliminating the counterflow particle. FIG. 13A depicts a setting example in a case of the inflow port 3 being circular. In this setting example, an angle $\theta$ is indicated with respect to a center of a circular inflow surface. The angle $\theta$ may be simply set by a 90° unit such as 90°, 180°, 270°, or the like. Alternatively, an area of the wall surface 9w may be set in a range from 90° to 180°.

FIG. 13B depicts a setting example in a case of the inflow port 3 being quadrangular. In this setting example, one surface is indicated for not eliminating the counterflow particle 52 from among four surfaces of the particle disappearance surface 9. Also, two surfaces or three surfaces may be indicated.

In the existing particle simulation, the particles (the fluid particles 51) generated at the particle generation surface 7 and multiple counterflow particles 52 adversely flowing are densely crowded in the vicinity of the inflow port 3. Then, the pressure becomes higher than the actual pressure in the vicinity of the inflow surface formed at the inflow port 3. As described above, according to the embodiment, it is possible to rectify a phenomenon represented by the pressure increasing more than the actual pressure in the vicinity of the inflow surface formed at the inflow port 3.

**Claims**

1. A particle simulation program that causes a computer to execute a process comprising:

   forming a particle generation surface (7) in a vicinity of an inflow port (3);
   forming a particle disappearance surface (9) representing a boundary to eliminate particles depending on the particle generation surface (7);
   performing a particle simulation, in which the particles of fluid filled in a vessel (2) are flowed out from the inflow port (3);
   periodically generating the particles from the particle generation surface (7); and
   eliminating a particle crossing out of the particle disappearance surface (9).

2. The particle simulation program as claimed in claim 1, wherein the particle that is eliminated crossing out of the particle disappearance surface indicates a velocity in a direction counter to an inflow direction (6f).

3. The particle simulation program as claimed in claim 1, wherein the process further comprises:

   setting a margin to extend a size of a cross-section of the formed particle disappearance surface (9) outwards with respect to the inflow port (3); and
   arranging the particle disappearance surface (9), which has the cross-section extending outwards with respect to the inflow port (3), at the inflow port (3).

4. The particle simulation program as claimed in claim 1, wherein the process further comprises:

   setting a partial area disabling the deleting of the particles on the formed particle disappearance surface (9).

5. The particle simulation program as claimed in claim 1, wherein the process further comprises:

   forming a run-up area between the particle generation surface (7) and the particle disappearance surface (9), the run-up area accelerating the particles generated on the particle generation surface (7).

6. A particle simulation method by a computer, the method comprising:

> forming a particle generation surface (7) in a vicinity of an inflow port (3);
> forming a particle disappearance surface (9) representing a boundary to eliminate particles depending on the particle generation surface (7);
> performing a particle simulation, in which the particles of fluid filled in a vessel (2) are flowed out from the inflow port (3);
> periodically generating the particles from the particle generation surface (7); and
> eliminating a particle crossing out of the particle disappearance surface (9).

7. An information processing apparatus comprising:

> a generation surface determination part (41a) configured to form a particle generation surface (7) in a vicinity of an inflow port (3);
> a particle disappearance surface setting part (41c) configured to form a particle disappearance surface (9), representing a boundary to eliminate particles, depending on the particle generation surface (7);
> a simulation execution part (45) configured to perform a particle simulation, in which the particles of fluid filled in a vessel (2) are flowed out from the inflow port (3);
> a particle generation part (45a) configured to periodically generate the particles from the particle generation surface (7); and
> a particle elimination generation part (45e) configured to eliminate a particle crossing out of the particle disappearance surface (9).

8. A particle simulation program that causes a computer to execute a process comprising:

> forming a particle disappearance surface (9) representing a boundary to eliminate particles at an inflow port (3);
> forming a particle generation surface (7) at an upstream side from the particle disappearance surface (9) with respect to an inflow direction (6f) of the particles;
> performing a particle simulation, in which the particles of fluid filled in a vessel (2) are flowed out from the inflow port (3);
> periodically generating the particles from the particle generation surface (7); and
> eliminating a particle crossing out of the particle disappearance surface (9).

# FIG.1

# FIG.2

1 MODEL

PARTICLE
GENERATION
SURFACE
7

3 INFLOW PORT

5 MOLD

GRAVITY
6

4 RUNNER

FIG.3

FIG.4

# FIG.5

PARTICLE SIMULATION APPARATUS — 100

130

**41 — INPUT DATA ACQUISITION PART**

- **41a — GENERATION SURFACE DETERMINATION PART**
- **41b — RUN-UP AREA SETTING PART**
- **41c — PARTICLE DISAPPEARANCE SURFACE SETTING PART**

**45 — SIMULATION EXECUTION PART**

- **45a — PARTICLE GENERATION PART**
- **45b — FLOW VELOCITY SETTING PART**
- **45c — MOTION ANALYSIS PART**
- **45d — PHYSICAL QUANTITY ACQUISITION PART**
- **45e — PARTICLE ELIMINATION PART**

**1 — MODEL**

**31 — PARTICLE GENERATION SURFACE INFORMATION**

**32 — RUN-UP AREA INFORMATION**

**33 — PARTICLE DISAPPEARANCE SURFACE INFORMATION**

**35 INPUT DATA**
- CONTINUOUS PARTICLES
- VIRTUAL PARTICLES
- RUN-UP AREA
- PARTICLE DISAPPEARANCE SURFACE

**37 PARTICLE DATA**
- PHYSICAL MODEL
- PHYSICAL QUANTITY

# FIG.6

PARTICLE DISAPPEARANCE
SURFACE SETTING PART /41c

DISAPPEARANCE
SURFACE
FORMATION PART /42a

MARGIN SETTING PART /42b

DISAPPEARANCE
AREA SETTING PART /42c

SURFACE
ARRANGEMENT PART /42d

33 PARTICLE DISAPPEARANCE
SURFACE INFORMATION

- DISAPPEARANCE SURFACE AND WIDTH
- MARGIN VALUE
- SURFACE INDICATION INFORMATION

EP 3 276 512 A1

# FIG.7

START

S71 — ACQUIRE INPUT DATA FOR SIMULATION EXECUTION PART

35 INPUT DATA
- CONTINUOUS PARTICLES
- VIRTUAL PARTICLES
- RUN-UP AREA
- PARTICLE DISAPPEARANCE SURFACE

S72 — CONDUCT GENERATION DETERMINATION OF INFLOW PARTICLES, AND GENERATE INFLOW PARTICLES BASED ON GENERATION DETERMINATION RESULT

S73 — SET FLOW VELOCITY

S74 — SOLVE MOVEMENT OF CONTINUOUS PARTICLES IN ACCORDANCE WITH PHYSICAL MODEL

37 PARTICLE DATA
- PHYSICAL MODEL
- PHYSICAL QUANTITY

S75 — ADVANCE CALCULATION ONE STEP

S76 — CONDUCT PARTICLE DISAPPEARANCE DETERMINATION BY PARTICLE DISAPPEARANCE SURFACE, AND DELETE COUNTERFLOW PARTICLES BASED ON PARTICLE DISAPPEARANCE DETERMINATION RESULT

S77 — OUTPUT CALCULATION RESULT

S78 — END ? — NO

YES

END

## FIG.8

```
                    ┌─────────────┐
                    │    START    │
                    └─────────────┘
                           │
                           ▼
                                                          ┌──1
S81 ──┌──────────────────────────────────┐      ┌──────────────────────┐
      │ ACQUIRE POSITION AND SHAPE OF     │      │        MODEL         │
      │ INFLOW PORT OF MOLD BASED ON      │      └──────────────────────┘
      │ MODEL                             │
      └──────────────────────────────────┘
                           │
                           ▼
                                                          ┌──31
S82 ──┌──────────────────────────────────┐      ┌──────────────────────┐
      │ SET PARTICLE GENERATION SURFACE   │      │      PARTICLE        │
      └──────────────────────────────────┘      │ GENERATION SURFACE   │
                           │                     │    INFORMATION       │
                           ▼                     └──────────────────────┘
                                                          ┌──32
S83 ──┌──────────────────────────────────┐      ┌──────────────────────┐
      │         SET RUN-UP AREA           │      │     RUN-UP AREA      │
      └──────────────────────────────────┘      │    INFORMATION       │
                           │                     └──────────────────────┘
                           ▼
S84 ──┌──────────────────────────────────┐
      │ GENERATE PARTICLE DISAPPEARANCE   │      ┌──────────────────────┐
      │             SURFACE               │      │ − DISAPPEARANCE       │
      └──────────────────────────────────┘      │   SURFACE AND WIDTH   │
                           │                     │ − MARGIN VALUE        │
                           ▼                     │ − SURFACE             │
S85 ··┌ ─ ─ ─ ─ ─ ─ ─ ─ ─ ─ ─ ─ ─ ─ ─ ─ ┐      │   INDICATION          │
      │ SET MARGIN TO MAKE SIZE OF        │      │   INFORMATION         │
      │ TUBULAR SECTIONAL SIZE OF         │      └──────────────────────┘
      │ PARTICLE DISAPPEARANCE SURFACE    │           ╲33 PARTICLE
      │ WIDER THAN INFLOW PORT            │              DISAPPEARANCE
      └ ─ ─ ─ ─ ─ ─ ─ ─ ─ ─ ─ ─ ─ ─ ─ ─ ┘              SURFACE
                           │                            INFORMATION
                           ▼
S86 ··┌ ─ ─ ─ ─ ─ ─ ─ ─ ─ ─ ─ ─ ─ ─ ─ ─ ┐
      │ SET DISAPPEARANCE AREA OR         │
      │ WALL SURFACE ON PARTICLE          │           ┌──35 INPUT DATA
      │ DISAPPEARANCE SURFACE             │      ┌──────────────────────┐
      └ ─ ─ ─ ─ ─ ─ ─ ─ ─ ─ ─ ─ ─ ─ ─ ─ ┘      │ − CONTINUOUS          │
                           │                     │   PARTICLES           │
                           ▼                     │ − VIRTUAL PARTICLES   │
S87 ──┌──────────────────────────────────┐      │ − RUN-UP AREA         │
      │ DEPLOY PARTICLE DISAPPEARANCE     │      │ − PARTICLE            │
      │ SURFACE BASED ON INFLOW PORT AND  │      │   DISAPPEARANCE       │
      │ INFLOW DIRECTION                  │      │   SURFACE             │
      └──────────────────────────────────┘      └──────────────────────┘
                           │
                           ▼
                    ┌─────────────┐
                    │     END     │
                    └─────────────┘
```

# FIG.9

**PARTICLE SIMULATION APPARATUS** /100-2

/130

/43
**INPUT DATA ACQUISITION PART**

/43a
**PARTICLE DISAPPEARANCE SURFACE SETTING PART**

/43b
**GENERATION SURFACE DETERMINATION PART**

/43c
**RUN-UP AREA SETTING PART**

/1
**MODEL**

/33
**PARTICLE DISAPPEARANCE SURFACE INFORMATION**

/31
**PARTICLE GENERATION SURFACE INFORMATION**

/32
**RUN-UP AREA INFORMATION**

/45
**SIMULATION EXECUTION PART**

/45a
**PARTICLE GENERATION PART**

/45b
**FLOW VELOCITY SETTING PART**

/45c
**MOTION ANALYSIS PART**

/45d
**PHYSICAL QUANTITY ACQUISITION PART**

/45e
**PARTICLE ELIMINATION PART**

/35 INPUT DATA
- CONTINUOUS PARTICLES
- VIRTUAL PARTICLES
- RUN-UP AREA
- PARTICLE DISAPPEARANCE SURFACE

/37 PARTICLE DATA
- PHYSICAL MODEL
- PHYSICAL QUANTITY

# FIG.10

```
                    ( START )
                        |
                        v
        +-------------------------------+        _1
S91 ~   | ACQUIRE POSITION AND SHAPE OF |      +------------------+
        | INFLOW PORT OF MOLD BASED ON  |      |      MODEL       |
        | MODEL                         |      +------------------+
        +-------------------------------+
                        |
                        v
        +-------------------------------+
S92 ~   | GENERATE PARTICLE DISAPPEARANCE|     - DISAPPEARANCE
        | SURFACE                       |        SURFACE AND WIDTH
        +-------------------------------+      - MARGIN VALUE
                        |                      - SURFACE
                        v                        INDICATION
        +- - - - - - - - - - - - - - - -+        INFORMATION
        | SET MARGIN TO MAKE SIZE OF    |
S93 ~   | TUBULAR SECTIONAL SIZE OF     |       \33 PARTICLE
        | PARTICLE DISAPPEARANCE SURFACE|          DISAPPEARANCE
        | WIDER THAN INFLOW PORT        |          SURFACE
        +- - - - - - - - - - - - - - - -+          INFORMATION
                        |
                        v
        +- - - - - - - - - - - - - - - -+
        | SET DISAPPEARANCE AREA OR     |
S94 ~   | WALL SURFACE ON PARTICLE      |        _31
        | DISAPPEARANCE SURFACE         |      +------------------+
        +- - - - - - - - - - - - - - - -+      |     PARTICLE     |
                        |                      | GENERATION SURFACE|
                        v                      |   INFORMATION    |
        +-------------------------------+      +------------------+
        | DEPLOY PARTICLE DISAPPEARANCE |
S95 ~   | SURFACE BASED ON INFLOW PORT AND|
        | INFLOW DIRECTION              |
        +-------------------------------+        _32
                        |                      +------------------+
                        v                      |   RUN-UP AREA    |
        +-------------------------------+      |   INFORMATION    |
S96 ~   | SET PARTICLE GENERATION SURFACE|     +------------------+
        +-------------------------------+
                        |                       _35 INPUT DATA
                        v                      +------------------+
        +-------------------------------+      | - CONTINUOUS     |
S97 ~   |      SET RUN-UP AREA          |      |   PARTICLES      |
        +-------------------------------+      | - VIRTUAL PARTICLES|
                        |                      | - RUN-UP AREA    |
                        v                      | - PARTICLE       |
                     ( END )                   |   DISAPPEARANCE  |
                                               |   SURFACE        |
                                               +------------------+
```

FIG.11B

FIG.11A

# FIG.12A

6f INFLOW DIRECTION

PARTICLE
GENERATION
SURFACE
7

8 RUN-UP AREA

PARTICLE
DISAPPEARANCE
SURFACE
9

3 INFLOW PORT

9j
MARGIN

4 RUNNER

# FIG.12B

6f INFLOW DIRECTION

PARTICLE
GENERATION
SURFACE
7

8 RUN-UP AREA

PARTICLE
DISAPPEARANCE
SURFACE
9

9j
MARGIN

3 INFLOW PORT

4 RUNNER

EP 3 276 512 A1

# FIG.13A

6f INFLOW DIRECTION

PARTICLE
GENERATION
SURFACE
7

8 RUN-UP AREA

$\theta$

9 PARTICLE
DISAPPEARANCE
SURFACE

3 INFLOW PORT

9w
WALL
SURFACE

4 RUNNER

# FIG.13B

6f INFLOW DIRECTION

PARTICLE
GENERATION
SURFACE
7

8 RUN-UP AREA

9 PARTICLE
DISAPPEARANCE
SURFACE

3 INFLOW PORT

9w
WALL
SURFACE

4 RUNNER

Europäisches
Patentamt

European
Patent Office

Office européen
des brevets

# EUROPEAN SEARCH REPORT

Application Number

EP 17 17 6349

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Angelantonio Tafuni ET AL: "Open boundary conditions for large-scale SPH simulations", 11th international SPHERIC workshop, 16 June 2016 (2016-06-16), pages 2-8, XP055394061, Retrieved from the Internet: URL:https://www.researchgate.net/profile/Angelo_Tafuni/publication/303466851_Open_boundary_conditions_for_large-scale_SPH_simulations/links/5766f6a608ae1658e2f718ea/Open-boundary-conditions-for-large-scale-SPH-simulations.pdf [retrieved on 2017-07-26] sections 3 & 4; * abstract * * the whole document * ----- | 1-8 | INV. G06F17/50 |
| X | FEDERICO I ET AL: "Simulating 2D open-channel flows through an SPH model", EUROPEAN JOURNAL OF MECHANICS B. FLUIDS, GAUTHIER-VILLARS, PARIS, FR, vol. 34, 14 February 2012 (2012-02-14), pages 35-46, XP028417908, ISSN: 0997-7546, DOI: 10.1016/J.EUROMECHFLU.2012.02.002 [retrieved on 2012-02-26] section 2.3; * abstract * * the whole document * ----- -/-- | 1-8 | TECHNICAL FIELDS SEARCHED (IPC) G06F |

The present search report has been drawn up for all claims

| Place of search | Date of completion of the search | Examiner |
|---|---|---|
| Munich | 29 November 2017 | Dapp, Wolfgang |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

Application Number

EP 17 17 6349

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MARTIN LASTIWKA ET AL: "Permeable and non-reflecting boundary conditions in SPH", INTERNATIONAL JOURNAL FOR NUMERICAL METHODS IN FLUIDS., vol. 61, no. 7, 10 November 2009 (2009-11-10), pages 709-724, XP055394055, GB ISSN: 0271-2091, DOI: 10.1002/fld.1971 sections 4 & 5; * abstract * * the whole document * | 1-8 | |
| X | EP 2 919 140 A1 (FUJITSU LTD [JP]) 16 September 2015 (2015-09-16) * paragraphs [0003], [0006], [0034] * * the whole document * | 1-8 | |

TECHNICAL FIELDS
SEARCHED       (IPC)

The present search report has been drawn up for all claims

| Place of search | Date of completion of the search | Examiner |
|---|---|---|
| Munich | 29 November 2017 | Dapp, Wolfgang |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

page 2 of 2

**EP 3 276 512 A1**

## ANNEX TO THE EUROPEAN SEARCH REPORT
## ON EUROPEAN PATENT APPLICATION NO.

EP 17 17 6349

This annex lists the patent family members relating to the patent documents cited in the above-mentioned European search report.
The members are as contained in the European Patent Office EDP file on
The European Patent Office is in no way liable for these particulars which are merely given for the purpose of information.

29-11-2017

| Patent document cited in search report | | Publication date | Patent family member(s) | Publication date |
|---|---|---|---|---|
| EP 2919140 | A1 | 16-09-2015 | EP 2919140 A1<br>JP 2015170327 A<br>US 2015254379 A1 | 16-09-2015<br>28-09-2015<br>10-09-2015 |

For more details about this annex : see Official Journal of the European Patent Office, No. 12/82

EPO FORM P0459

26

## REFERENCES CITED IN THE DESCRIPTION

### Patent documents cited in the description

- JP 2015170327 A
- JP 2014081900 A
- JP 2002283001 A
- WO 2010032656 A

### Non-patent literature cited in the description

- **J. J. MONAGHAN.** Smoothed Particle Hydrodynamics. *Annu. Rev. Astron. Astrophys,* 1992, vol. 30, 543-74